# FASCICULE DE BREVET EUROPEEN

(11) **EP 3 472 256 B1**
(45) Date de publication et mention de la délivrance du brevet: **19.08.2020**
(21) Numéro de dépôt: 17734803.4
(22) Date de dépôt: 15.06.2017
(51) Int. Cl.: C09K 5/04

(54) **MÉLANGES RÉFRIGÉRANTS FAIBLEMENT INFLAMMABLES OU ININFLAMMABLES CARACTÉRISÉS PAR UNE FAIBLE VOLATILITE RELATIVE POUR LES SYSTÈMES D'ÉCHANGE THERMIQUE DIPHASIQUE**
NICHT ENTFLAMMBARE ODER SCHWER ENTFLAMMBARE KÜHLGEMISCHE, GEKENNZEICHNET DURCH NIEDRIGE RELATIVE FLÜCHTIGKEIT FÜR ZWEIPHASIGE WÄRMEAUSTAUSCHSYSTEME
NON-FLAMMABLE OR LOW-FLAMMABILITY COOLING MIXTURES, CHARACTERISED BY LOW RELATIVE VOLATILITY FOR TWO-PHASE HEAT-EXCHANGE SYSTEMS

(30) Priorité: 16.06.2016 FR 1655577
(43) Date de publication de la demande: 24.04.2019
(73) Titulaire: Safran Electrical & Power, 31702 Blagnac Cedex (FR); Centre National de la Recherche Scientifique (CNRS), 75016 Paris (FR); Institut National Polytechnique, 31000 Toulouse (FR); Université des Sciences et Technologies de Lille, 59650 Villeneuve d'Ascq (FR); Ecole Nationale Superieure de Chimie de Lille, 59650 Villeneuve d'Ascq (FR)
(72) Inventeur: DELALANDRE, Nicolas, 31700 Blagnac (FR); JOOSSEN, Benjamin Roland Stanislas, 62500 Tatinghem (FR); AUBRY, Jean-Marie, 62590 Oignies (FR); GERBAUD, Vincent, 31330 Merville (FR); RODRIGUEZ-DONIS, Ivonne, 31400 Toulouse (FR)
(74) Mandataire: Regimbeau
(86) Numéro de dépôt international: PCT/FR2017/051559
(87) Numéro de publication internationale: WO 2017/216492

(56) Documents cités:
- EP-B1- 0 828 815
- WO-A1-00/36046
- US-B1- 6 417 153

## Description

La présente invention concerne le domaine des fluides caloporteurs pour échangeurs de chaleur, tels que des échangeurs diphasiques à pompage capillaire ou mécanique.

Le choix du fluide caloporteur pour un échangeur de chaleur diphasique est de la plus haute importance. En effet, le principe de fonctionnement d'un système d'échange thermique diphasique est fondé sur l'évaporation et la condensation d'un fluide dit caloporteur, en cela qu'il permet les échanges de chaleur. Aussi, la performance du dispositif ainsi que son adéquation à un environnement donné dépendent largement des propriétés du fluide. Dans le cas des échangeurs diphasiques à pompage capillaire par exemple, la mise en mouvement du fluide est directement impactée par sa mouillabilité avec la structure poreuse de l'échangeur.

Les fluides réfrigérants couramment employés dans les systèmes de refroidissement diphasiques sont principalement des corps purs, à savoir l'ammoniac, le méthanol, l'acétone, et l'éthanol. Or, leur utilisation s'avère particulièrement dangereuse, dans la mesure où les deux premiers sont toxiques (la dose létale médiane, DL₅₀, de l'ammoniac n'est que de 350 mg/kg), tandis que les deux autres sont très inflammables (les points d'éclair, notés PE, de l'acétone et de l'éthanol sont respectivement de -20°C et 13°C).

Outre les exigences relatives à la sécurité, le fluide caloporteur doit présenter des caractéristiques qui garantissent de bonnes performances en tant que liquide réfrigérant. Ainsi, de fortes enthalpies de vaporisation (ΔHᵥₐₚ ci-après), capacité calorifique et conductivité thermique favorisent les échanges thermiques et permettent ainsi de concevoir des échangeurs de chaleur plus compacts et moins lourds, ce qui constitue un avantage indéniable pour des applications dans le domaine des transports (auto, avion, train) notamment.

L'eau pourrait apparaître comme étant le candidat idéal. De fait, il s'agit d'un composé non-toxique, ininflammable, et qui présente une enthalpie de vaporisation très élevée, supérieure à 2000 kJ/kg, autant de critères que doit vérifier un bon fluide caloporteur. Néanmoins, sa température de fusion (T_{f} ci-après) est beaucoup trop élevée, ce qui restreint drastiquement ses potentielles applications. En effet, l'eau gèle à 0°C, tandis qu'un fluide doit exister à l'état liquide à des températures inférieures afin de pouvoir envisager son utilisation au sein d'un système de refroidissement faisant partie intégrante d'un véhicule de transport par exemple. Il importe donc que le fluide caloporteur présente une température de fusion suffisamment basse, tout en ayant une température d'ébullition (T_{éb}) compatible avec les conditions d'usage souhaitées. Il est notamment nécessaire que le fluide ait une bonne volatilité, ce qui se traduit par une température d'ébullition modérée (typiquement T_{éb} inférieure à 120°C sous une pression de 1 atm) à la pression d'utilisation.

Par conséquent, le nombre de caractéristiques que doit comporter un fluide caloporteur est tel qu'il est difficile de trouver un composé pur qui soit pleinement satisfaisant. De ce fait, le recours à des mélanges s'impose, de façon à pallier les insuffisances d'un fluide pur relativement à une ou plusieurs spécifications.

Ainsi, des mélanges d'eau et d'éthylène glycol sont fréquemment employés dans les systèmes de refroidissement industriels, notamment au sein des radiateurs de véhicules de transport, et ce malgré la toxicité aiguë de l'éthylène glycol, qui fait office d'antigel dans le mélange.

Néanmoins, les mélanges présentent un inconvénient majeur dans la perspective d'une utilisation dans un système d'échange thermique diphasique qui est lié à leur nature même. En effet, lorsqu'un mélange s'évapore, les phases vapeur et liquide en équilibre ont de manière générale des compositions différentes, ce qui peut conduire à des phénomènes de vaporisation ou de condensation partielles, dont il résulte une dégradation des performances thermiques de l'échangeur de chaleur au sein duquel est incorporé ledit mélange.

Ce problème peut être évité en privilégiant l'utilisation de mélanges azéotropiques, ce qui a d'ores et déjà été proposé dans la littérature. Par définition, un azéotrope est un mélange de deux composés ou plus qui se comporte comme un corps pur, en cela qu'à la composition dite azéotropique, les phases vapeur et liquide ont la même composition. De ce fait, un changement d'état liquide - vapeur à pression constante n'entraîne aucune modification de la composition de la phase vapeur. Ainsi, des mélanges azéotropiques binaires ou ternaires sont commercialisés en tant que fluide réfrigérant par la société 3M notamment.

Elle a été la première à développer des solvants comprenant des hydrofluoroéthers (HFE) pour diverses applications industrielles, telles que le dégraissage à la vapeur, le nettoyage à froid et les systèmes de refroidissement fondés sur l'utilisation d'un fluide caloporteur. Ces composés ont été proposés en remplacement des hydrofluorocarbures (HFC), qui constituaient eux-mêmes une alternative aux chlorofluorocarbures (CFC) et hydrochlorofluorocarbures (HCFC), largement utilisés par le passé en tant que fluides de réfrigération et propulseurs d'aérosols. Si les HFC ne dégradent pas directement l'ozone stratosphérique contrairement à leurs analogues chlorés, ils font néanmoins partie de la liste des principaux gaz à effet de serre du protocole de Kyoto, du fait de leur contribution au réchauffement climatique quantifiée par un potentiel de réchauffement global (PRG) très élevé.

Des solvants de nouvelle génération comportant un ou plusieurs HFE sont commercialisés par la société 3M comme fluides réfrigérants dans le domaine de l'électronique, mais aussi pour des systèmes de réfrigérations domestiques et industriels tels que les réfrigérateurs, les pompes à chaleur, les climatisations, ainsi que pour la gestion thermique des réacteurs chimiques.

La gamme de fluides caloporteurs 3M™ Novec™ présente de nombreux avantages. Tout d'abord, ils ne constituent pas un danger pour l'homme ou l'environnement, dans la mesure où ils sont ininflammables et non toxiques, ne causent pas de détérioration de la couche d'ozone, et ont un PRG très faible qui s'explique par une durée de vie dans l'atmosphère réduite. En outre, leurs températures de fusion sont extrêmement basses, et selon l'HFE employé, la température d'ébullition peut être très différente, ce qui permet d'envisager des utilisations dans des conditions variées. Ceci étant, ces produits commerciaux ont une enthalpie de vaporisation inférieure à 150 kJ/kg, ce qui est trop faible pour qu'ils puissent être considérés comme efficaces du point de vue des échanges thermiques. Le tableau 1 ci-dessous récapitule les caractéristiques physico-chimiques de certains HFE de la gamme 3M™ Novec™.

**Tableau 1 : Propriétés des fluides réfrigérants de la gamme 3M™ Novec™**

| *3M™ Novec™* | PRG | PE (°C) | T_{f} (°C) | T_{éb} (°C) | ΔHᵥₐₚ (kJ/kg) |
|---|---|---|---|---|---|
| *HFE* 7000 1-méthoxyheptafluropropane | 370 | Aucun | -122 | 34 | 142 |
| HFE 7100 1-méthoxynonaflurobutane | 320 | Aucun | -135 | 61 | 112 |
| HFE 7200 1-éthoxynonaflurobutane | 55 | Aucun | -138 | 76 | 119 |
| HFE 7300 1,1,1,2,2,3,4,5,5,5-décafluoro-3-méthoxy-2-trifluorométhylpentane | 200 | Aucun | -38 | 98 | 102 |
| HFE 7500 2-trifluorométhyl-3-éthoxydodécafluorohexane | 210 | Aucun | -110 | 128 | 88 |

Le fait de mélanger un HFE et un solvant organique non toxique ayant une bonne capacité calorifique peut permettre de pallier les insuffisances du composé fluoré en termes de performances thermiques. En effet, le mélange bénéficie de l'enthalpie de vaporisation d'un solvant organique bien choisi, tandis que le HFE agit en tant que retardateur de flamme et abaisse le point d'éclair du solvant afin de satisfaire à de strictes exigences relatives à la sécurité. Ainsi, il est souhaitable que le mélange soit faiblement inflammable (catégorie 3 selon la classification européenne), ce qui correspond à un point d'éclair PE tel que 23°C ≤ PE < 60°C, ou ininflammable (catégorie 4), c'est-à-dire ayant un PE supérieur ou égal à 60°C.

US 6 417 153 divulgue un mélange azéotropique comprenant un hydrofluoroéther (le 3-éthoxyperfluoro-2-méthylhexane) et l'heptane-2-one. Le mélange est considéré inflammable et comme conséquence montre un point d'éclair supérieur ou égal à 38 °C. US 6 417 153 divulgue aussi l'utilisation du mélange comme fluide caloporteur dans des procédé d'échange de chaleur indirecte (par exemple dans un pompe à chaleur).

WO 00/36046 divulgue un premier mélange azéotropique ou pseudo-azéotropique comprenant du HFC-365mfc, du perfluorohexane et de l'acétate d'éthyle et un second mélange azéotropique ou pseudo-azéotropique comprenant du HFC-365mfc, du perfluorobutyléther et de l'isopropanol. Les composition ne présentent pas des points d'éclairs.

Des compositions azéotropiques contenant le HFE 3M™ Novec™ 7100, qui correspond en réalité à deux isomères inséparables (le 1-méthoxyperfluorobutane et le 1-méthoxynonafluoroisobutane), en mélange avec différents solvants organiques ont été brevetées par la société 3M (EP 0 828 815 B1 et US 005827812 A). Les solvants organiques employés consistent essentiellement en des alcools, des éthers, des composés chlorés, et des fluoro-alcools. Le tableau 2 ci-dessous indique la composition et la température de certains azéotropes proposés dans le brevet européen précédemment mentionné, ainsi que leur caractère inflammable, ou non (PE supérieur à 60°C).

**Tableau 2 : Azéotropes décrits dans le brevet EP 082881581**

| | HFE : 1-méthoxyperfluorobutane 0,35 % (du poids total) | | |
|---|---|---|---|
| | 1-méthoxynonafluoroisobutane 0,65 % (du poids total) | | |
| Solvant | *azéotrope* | | |
| | T_{éb} (°C) | Fraction massique en HFE | Inflammable ? |
| Méthanol | 45,8 | 0,896 | Oui |
| Ethanol | 52 | 0,934 | Oui |
| Propanol | 56,2 | 0,974 | Non |
| Iso-butanol | 58,3 | 0,988 | Non |
| Tert-butanol | 55,8 | 0,938 | Non |
| Hexafluoro-Propan-2-ol | 52,5 | 0,575 | Non |

La quasi-totalité des mélanges azéotropiques ininflammables proposés dans le brevet ont une fraction massique (notée x ci-après) en HFE supérieure à 0,9. Il en résulte une enthalpie de vaporisation proche de celle du HFE, qui est par conséquent insatisfaisante.

La demanderesse a calculé les équilibres liquide-vapeur des différents mélanges selon ledit brevet à l'aide du modèle thermodynamique UNIFAC ORIGINAL (Fredenslund et al., AjChE J. Vol. 21 1975).

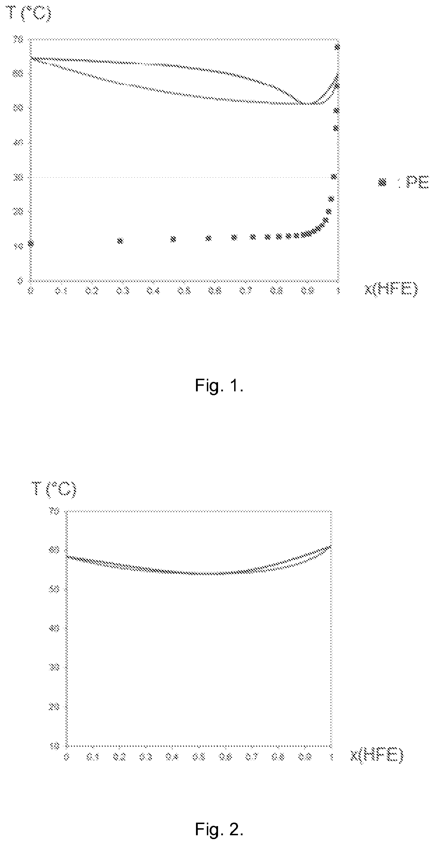

Le diagramme obtenu pour le mélange avec le méthanol (figure 1) met en évidence un inconvénient majeur caractéristique des azéotropes HFE - alcools. En effet, lorsque la composition du mélange s'éloigne légèrement de celle de l'azéotrope, la volatilité relative devient rapidement supérieure à 1,5, si bien que les phases vapeur et liquide ont des compositions sensiblement différentes, ce qui entraîne le phénomène de vaporisation partielle du mélange qui nuirait à l'efficacité de l'échangeur thermique qui l'incorporerait. En pratique, la variation de la composition du mélange par rapport au point azéotropique peut résulter d'une simple et faible variation de pression au sein du dispositif.

Le diagramme binaire du mélange breveté le plus prometteur du point de vue de la performance thermique, en cela que la fraction massique en HFE de l'azéotrope est seulement de 0,575, présente une allure radicalement différente (figure 2). En effet, il est à noter que la volatilité relative du mélange constitué de HFE 3M™ Novec™ 7100 (0,35 % de 1-méthoxyperfluorobutane, 0,65 % de 1-méthoxynonafluoroisobutane en poids par rapport au poids total) et d'hexafluoropropan-2-ol est proche de l'unité quelle que soit la composition du mélange, ce qui permet d'éviter le phénomène de vaporisation partielle.

La présente invention a donc pour but de proposer de nouveaux mélanges réfrigérants non-toxiques et respectueux de l'environnement, qui peuvent être utilisés dans des conditions variées sans déroger aux exigences en matière de sécurité, tout en assurant l'efficacité de l'échangeur de chaleur au sein duquel ils sont incorporés.

Cette dernière spécification peut être exprimée sous la forme de deux critères que doivent vérifier les mélanges de l'invention :
- le mélange peut emmagasiner une importante quantité de chaleur, ce qui peut s'exprimer par une enthalpie de vaporisation supérieure à 150 kJ/kg pour un mélange faiblement inflammable (catégorie 3) et supérieure à 100 kJ/kg pour un mélange ininflammable (catégorie 4).
- la composition du mélange ne varie pas sous l'effet d'une faible variation de pression. Ledit mélange doit donc avoir une faible volatilité relative sur une large plage de composition, caractéristique qui se traduit dans un diagramme composition - température ou composition - pression par un faisceau de courbes de bulle et de rosée écrasé.

Le demandeur a résolu ce problème technique par la mise au point de nouveaux mélanges réfrigérants qui vérifient l'ensemble des critères précédemment énumérés.

Un objet de la présente invention consiste donc en un mélange réfrigérant comprenant un composé fluoré et un composé non fluoré, dans lequel le composé fluoré est un hydrofluoroéther choisi parmi le 1-méthoxyperfluoropentane, le 1-méthoxyperfluorohexane, le 1,1,1,2,2,3,4,5,5,5-décafluoro-3-méthoxy-2-trifluorométhylpentane, le 1,1,2,2-tétrafluoroéthyl-2,2,3,3-tétrafluoropropyléther et le 1 H,1 H,2H',3H-décafluoro-dipropyléther, et le composé non fluoré comporte une fonction carbonyle et est choisi parmi le formiate de butyle, l'acétate de tert-butyle, l'acétate de propyle, le carbonate de méthyle et d'éthyle, le carbonate de diméthyle et la pentan-3-one, ledit mélange présentant un point d'éclair supérieur ou égal à 23°C et étantcaractérisé parune faible volatilité relative.

Un autre objet de l'invention concerne l'utilisation d'un tel mélange comme fluide caloporteur, avantageusement dans un échangeur de chaleur tel qu'un échangeur diphasique.

Un objet additionnel de la présente invention a trait à un dispositif d'échange de chaleur comprenant comme fluide caloporteur un mélange selon l'invention.
La figure 1 représente le diagramme composition - température de l'équilibre liquide-vapeur du mélange constitué du HFE 3M™ Novec™ 7100 (0,35 % de 1-méthoxyperfluorobutane, 0,65 % de 1-méthoxynonafluoroisobutane en poids par rapport au poids total) et de méthanol. Sur le diagramme est également indiquée la valeur du point d'éclair du mélange en fonction de la fraction massique en HFE, x(HFE).
La figure 2 correspond quant à elle au diagramme composition - température de l'équilibre liquide-vapeur du mélange constitué du HFE 3M™ Novec™ 7100 (0,35 % de 1-méthoxyperfluorobutane, 0,65 % de 1-méthoxynonafluoroisobutane en poids par rapport au poids total) et d'hexafluoropropan-2-ol.

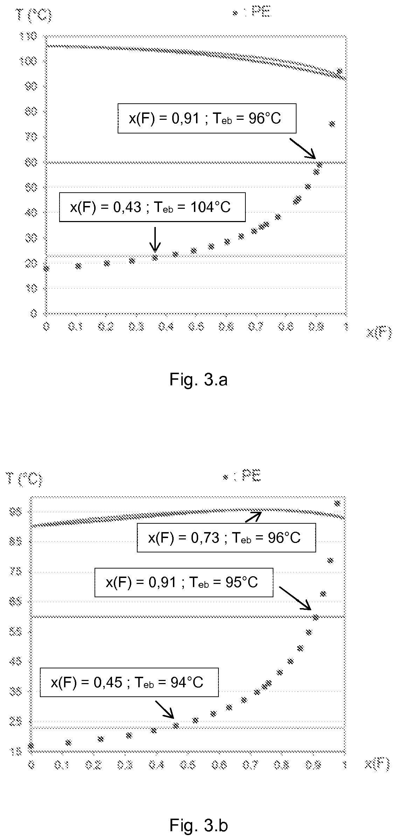

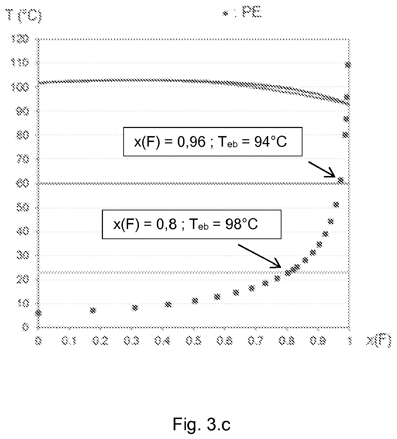

La figure 3 répertorie les diagrammes binaires composition - température des équilibres liquide - vapeur de certains mélanges selon l'invention, caractérisés par des faisceaux de courbes de rosée et d'ébullition écrasés. Sur un diagramme donné est également indiquée la valeur du point d'éclair du mélange correspondant en fonction de la fraction massique en composé fluoré, x(F). Le modèle thermodynamique UNIFAC ORIGINAL a été utilisé pour le calcul de l'équilibre binaire liquide - vapeur ainsi que pour le calcul de point d'éclair en appliquant la règle de Le Chatelier (Annals of Mines 19, 388-395. 1891) pour les mélanges binaires avec un composant ininflammable (Liaw H-J et al., Fluid Phase Equilibria. 300. 70-82. 2011). L'enthalpie de vaporisation de mélange résultante est calculée par interpolation linéaire en fonction de la composition massique.
- La figure 3.a correspond au diagramme binaire du mélange : 1,1,2,2-tetrafluoroéthyl-2,2,3,3-tétrafluoropropyléther et formiate de butyle.
- La figure 3.b correspond au diagramme binaire du mélange : 1,1,2,2-tetrafluoroéthyl-2,2,3,3-tétrafluoropropyléther et carbonate de diméthyle.
- La figure 3.c correspond au diagramme binaire du mélange : 1,1,2,2-tetrafluoroéthyl-2,2,3,3-tétrafluoropropyléther et pentan-3-one.

Au sens de la présente invention, on entend par « PE » ou « point d'éclair » la température minimale exprimée en degré Celsius à laquelle une substance combustible émet des vapeurs en concentration suffisante pour former avec l'air ambiant un mélange gazeux qui s'enflamme au contact d'une flamme ou d'un point chaud, mais insuffisante pour que la combustion se propage d'elle-même en l'absence de la flamme dite pilote. Selon le règlement (CE) N° 1272/2008, du Parlement européen et du Conseil du 16 décembre 2008 relatif à la classification, à l'étiquetage et à l'emballage des substances et des mélanges, un fluide ayant un PE tel que 23°C ≤ PE < 60°C appartient à la catégorie 3 « faiblement inflammable », la catégorie 4 « ininflammable » correspondant à un PE supérieur ou égal à 60°C.

Par « retardateur de flamme », on entend au sens de la présente invention une substance qui a pour fonction de diminuer le point éclair d'un autre composé.

Un hydrofluoroéther ou HFE, également appelé fluoro-éther dans la littérature, est, au sens de la présente invention, un éther R₁-O-R₂ dont une partie ou la totalité des atomes d'hydrogène des chaînes hydrocarbonées R₁ et R₂ sont remplacés par des atomes de fluor.

Par fluoro-alcool, on entend un alcool R₃-OH dont une partie ou la totalité des atomes d'hydrogène de la chaîne hydrocarbonée R₃ sont remplacés par des atomes de fluor.

Un fluoro-alcane est, un alcane, c'est-à-dire un hydrocarbure saturé, dont une partie ou la totalité des atomes d'hydrogène sont remplacés par des atomes de fluor.

Au sens de la présente invention, le « potentiel de réchauffement global », ou « PRG », est un indice de comparaison associé à un gaz à effet de serre, qui quantifie sa contribution marginale au réchauffement global comparativement à celle du dioxyde de carbone sur une période de 100 ans.

Par mélange ayant une « faible volatilité relative », on entend au sens de l'invention un mélange qui présente une volatilité relative proche de l'unité sur une large plage de composition, ce qui se traduit dans un diagramme d'équilibre liquide-vapeur par des courbes de température d'ébullition et de rosée quasi coïncidentes, qui forment ainsi un faisceau de courbes écrasé, tel que dans les figures 3.a, 3b et 3.c. A noter que l'existence d'un point azéotropique est une condition ni nécessaire, ni suffisante pour qu'un tel écrasement émerge.

La présente invention concerne en premier lieu un mélange réfrigérant comprenant un composé fluoré et un composé non fluoré, dans lequel le composé fluoré est un hydrofluoroéther choisi parmi le 1-méthoxyperfluoropentane, le 1-méthoxyperfluorohexane, le 1,1,1,2,2,3,4,5,5,5-décafluoro-3-méthoxy-2-trifluorométhylpentane, le 1,1,2,2-tétrafluoroéthyl-2,2,3,3-tétrafluoropropyléther et le 1 H,1 H,2H',3H-décafluoro-dipropyléther, et le composé non fluoré comporte une fonction carbonyle et est choisi parmi le formiate de butyle, l'acétate de tert-butyle, l'acétate de propyle, le carbonate de méthyle et d'éthyle, le carbonate de diméthyle et la pentan-3-one, ledit mélange présentant un point d'éclair supérieur ou égal à 23°C et étantcaractérisé parune faible volatilité relative.

Un tel mélange peut comporter un point azéotropique, ou non. Ceci étant, il a nécessairement une faible volatilité relative sur la gamme de composition d'intérêt.

Le composé carbonylé est choisi parmi le formiate de butyle, l'acétate de tert-butyle, l'acétate de propyle, le carbonate de méthyle et d'éthyle, le carbonate de diméthyle et la pentan-3-one.

Outre un composé non fluoré, un mélange selon l'invention comprend un composé fluoré.

Le composé fluoré est un hydrofluoroéther.

L'hydrofluoroéther est choisi parmi le 1-méthoxyperfluoropentane, le 1-méthoxyperfluorohexane, le 1,1,1,2,2,3,4,5,5,5-décafluoro-3-méthoxy-2-trifluorométhylpentane, le 1,1,2,2-tétrafluoroéthyl-2,2,3,3-tétrafluoropropyléther et le 1H, 1H,2H',3H-décafluoro-dipropyléther.

De tels mélanges sont caractérisés par l'existence de fortes liaisons hydrogène intermoléculaires : l'hydrofluoroéther est, de par l'important effet électroattracteur de l'atome de fluor, donneur d'hydrogène, tandis que le groupement carbonyle est accepteur. Ces fortes interactions électrostatiques favorisent la formation d'un azéotrope à température d'ébullition maximale. Cette déviation azéotropique négative, que l'on ne trouve dans aucun des mélanges réfrigérants de la littérature, est particulièrement intéressante dans la mesure où le point d'éclair d'un mélange a tendance à être d'autant plus élevé que sa température d'ébullition est grande, du fait du lien intrinsèque entre ces deux grandeurs. Si le mélange ne comporte pas de composition azéotropique, le faisceau de courbes de rosée et d'ébullition est néanmoins également concave, ce qui a donc les mêmes effets sur le point d'éclair.

Un mélange réfrigérant selon l'invention comprend un hydrofluoroéther et un composé carbonylé, ledit hydrofluoroéther étant choisi parmi le 1-méthoxyperfluoropentane, le 1-méthoxyperfluorohexane, le 1,1,1,2,2,3,4,5,5,5-décafluoro-3-méthoxy-2-trifluorométhylpentane, le 1,1,2,2-tétrafluoroéthyl-2,2,3,3-tétrafluoropropyléther et le 1H ,1H,2H',3H-décafluoro-dipropyléther, et le composé carbonylé étant choisi parmi le formiate de butyle, l'acétate de tert-butyle, l'acétate de propyle, le carbonate de méthyle et d'éthyle, le carbonate de diméthyle et la pentan-3-one, ledit mélange présentant un point d'éclair supérieur ou égal à 23°C et étant caractérisé par une faible volatilité relative..

Le tableau 3 répertorie les compositions et caractéristiques de certains mélanges selon l'invention, particulièrement avantageux. Lorsque le mélange présente un point azéotropique, celui-ci est précisé.

**Tableau 3 : Caractéristiques de mélanges HFE - composé carbonylé de l'invention**

| 1-Méthoxyperfluoropentane | | PE (en °C) | Téb (en °C) | T_{f} (en °C) | ΔHᵥₐₚ (kJ/kg) |
|---|---|---|---|---|---|
| 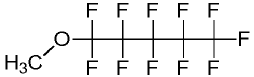 | | aucun | 84,9 | -69 | 105 |
| Formiate de butyle | | 18 | 106 | -90 | 358 |
| 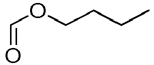 | | | | | |
| Mélange catégorie 3 | X_{HFE} = 0,43 | 23 | - | - | 249 |
| Mélange catégorie 4 | x_{HFE}= 0,93 | 60 | - | - | 123 |
| Carbonate de diméthyle | | 17 | 90 | 4 | 366 |
| 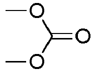 | | | | | |
| azéotrope | X_{HFE} = 0,64 | 28 | 96 | - | 200 |
| Mélange catégorie 3 | X_{HFE} = 0,5 | 23 | 96 | - | 235 |
| Mélange catégorie 4 | X_{HFE} = 0,92 | 60 | 90 | - | 126 |

| 1-Méthoxyperfluorohexane | | PE (en °C) | Téb (en °C) | T_{f} (en °C) | ΔHᵥₐₚ (kJ/kg |
|---|---|---|---|---|---|
| 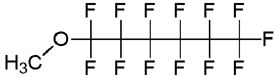 | | aucun | 108 | -88 | 95,4 |
| Formiate de butyle | | 18 | 106 | -90 | 358 |
| 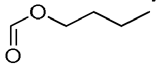 | | | | | |
| azéotrope | X_{HFE} = 0,77 | 31 | 112 | - | 156 |
| Mélange catégorie 3 | X_{HFE} = 0,48 | 23 | 110 | - | 232 |
| Mélange catégorie 4 | x_{HFE}= 0,93 | 60 | 110 | - | 114 |
| Acétate de propyle | | 14 | 102 | -95 | 332 |
| 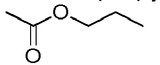 | | | | | |
| azéotrope | X_{HFE} = 0,89 | 41 | 109 | - | 122 |
| Mélange catégorie 3 | X_{HFE} = 0,65 | 23 | - | - | 178 |
| Mélange catégorie 4 | X_{HFE} = 0,96 | 60 | - | - | 105 |
| Carbonate de méthyle et d'éthyle | | 23 | 107 | -53 | 352 |
| 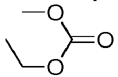 | | | | | |
| azéotrope | X_{HFE} = 0,73 | 39 | 114 | | 165 |
| Mélange catégorie 3 | X_{HFE} = 0 | 23 | 107 | -53 | 352 |
| Mélange catégorie 4 | X_{HFE} = 0,90 | 60 | 112 | - | 121 |
| Pentan-3-one | | 13 | 102 | -39 | 388 |
| 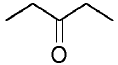 | | | | | |
| azéotrope | X_{HFE} = 0,87 | 37 | 109 | - | 134 |
| Mélange catégorie 3 | X_{HFE} = 0,7 | 23 | - | - | 184 |
| Mélange catégorie 4 | X_{HFE} = 0,96 | 60 | - | - | 108 |

| 1,1,1,2,2,3,4,5,5,5-décafluoro-3-méthoxy-2-trifluorométhylpentane | | PE (en °C) | Téb (en °C) | T_{f} (en °C) | ΔHᵥₐₚ (kJ/kg) |
|---|---|---|---|---|---|
| 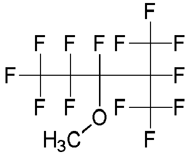 | | aucun | 98 | -38 | 89 |
| Formiate de butyle | | 18 | 106 | -90 | 358 |
| 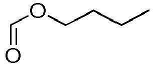 | | | | | |
| azéotrope | X_{HFE} = 0,55 | 25 | 109 | - | 210 |
| Mélange catégorie 3 | X_{HFE} = 0,47 | 23 | 108 | - | 232 |
| Mélange catégorie 4 | X_{HFE} = 0,94 | 60 | 102 | - | 106 |
| Acétate de tert-butyle | | 14 | 96 | -58 | 285 |
| 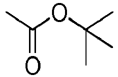 | | | | | |
| azéotrope | X_{HFE} = 0,88 | 36 | 99 | - | 112 |
| Mélange catégorie 3 | X_{HFE} = 0,67 | 23 | - | - | 153 |
| Mélange catégorie 4 | X_{HFE} = 0,96 | 60 | - | - | 97 |
| Carbonate de méthyle et d'éthyle | | 23 | 107 | -53 | 352 |
| 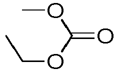 | | | | | |
| azéotrope | X_{HFE} = 0,55 | 31 | 111 | - | 207 |
| Mélange catégorie 3 | X_{HFE} = 0 | 23 | 107 | -53 | 352 |
| Mélange catégorie 4 | X_{HFE} = 0,90 | 60 | - | - | 116 |
| Carbonate de diméthyle | | 17 | 90 | 4 | 366 |
| 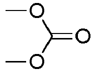 | | | | | |
| azéotrope | X_{HFE} = 0,84 | 41 | 101 | - | 133 |
| Mélange catégorie 3 | X_{HFE} = 0,8 | 23 | - | - | 144 |
| Mélange catégorie 4 | x_{HFE}= 0,93 | 60 | - | - | 110 |
| Pentan-3-one | | 13 | 102 | -39 | 388 |
| 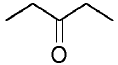 | | | | | |
| azéotrope | X_{HFE} = 0,67 | 22 | 105 | - | 187 |
| Mélange catégorie 3 | X_{HFE} = 0,70 | 23 | - | - | 180 |
| Mélange catégorie 4 | X_{HFE} = 0,96 | 60 | - | - | 101 |

| 1,1,2,2-tetrafluoroéthyl-2,2,3, 3-tétrafluoropropyléther | | PE (en °C) | Téb (en °C) | T_{f} (en °C) | ΔHᵥₐₚ (kJ/kg) |
|---|---|---|---|---|---|
| 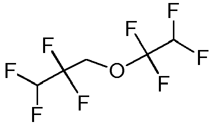 | | aucun | 93 | -94 | 140 |
| Formiate de butyle | | 18 | 106 | -90 | 358 |
| 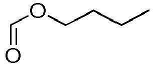 | | | | | |
| Mélange catégorie 3 | X_{HFE} = 0,43 | 23 | 104 | - | 264 |
| Mélange catégorie 4 | X_{HFE} = 0,91 | 60 | 96 | - | 159 |
| Acétate de tert-butyle | | 14 | 96 | -58 | 285 |
| 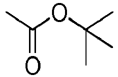 | | | | | |
| Mélange catégorie 3 | X_{HFE} = 0,57 | 23 | - | - | 202 |
| Mélange catégorie 4 | X_{HFE} = 0,9 | 60 | - | - | 154 |
| Acétate de propyle | | 14 | 102 | -95 | 332 |
| 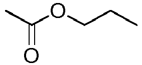 | | | | | |
| Mélange catégorie 3 | X_{HFE} = 0,53 | 23 | - | - | 230 |
| Mélange catégorie 4 | X_{HFE} = 0,92 | 60 | - | - | 155 |
| Carbonate de méthyle et d'éthyle | | 23 | 107 | -53 | 352 |
| 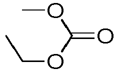 | | | | | |
| Mélange catégorie 3 | X_{HFE} = 0 | 23 | 107 | -53 | 352 |
| Mélange catégorie 4 | X_{HFE} = 0,87 | 60 | - | - | 167 |
| Carbonate de diméthyle | | 17 | 90 | 4 | 366 |
| 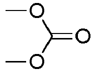 | | | | | |
| azéotrope | X_{HFE} = 0,73 | 35 | 96 | - | 201 |
| Mélange catégorie 3 | X_{HFE} = 0,45 | 23 | 94 | - | 264 |
| Mélange catégorie 4 | X_{HFE} = 0,91 | 60 | 95 | - | 160 |
| Pentan-3-one | | 13 | 102 | -39 | 388 |
| 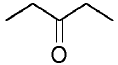 | | | | | |
| Mélange catégorie 3 | X_{HFE} = 0,8 | 23 | | | 189 |
| Mélange catégorie 4 | X_{HFE} = 0,96 | 60 | | | 150 |

| 1H, 1H, 2H', 3H-décafluorodipropyléther | | PE (en °C) | Téb (en °C) | T_{f} (en °C) | ΔHᵥₐₚ (kJ/kg) |
|---|---|---|---|---|---|
| 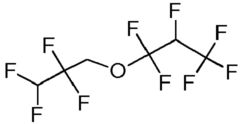 | | aucun | 105 | -11 | 131 |
| Formiate de butyle | | 18 | 106 | -90 | 358 |
| 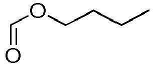 | | | | | |
| azéotrope | X_{HFE} = 0,72 | 44 | 110 | - | 195 |
| Mélange catégorie 3 | X_{HFE} = 0,47 | 23 | 109 | - | 251 |
| Mélange catégorie 4 | X_{HFE} = 0,92 | 60 | 108,5 | - | 149 |
| Acétate de propyle | | 14 | 102 | -95 | 332 |
| 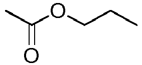 | | | | | |
| azéotrope | x_{HFE}= 0,93 | 50 | 107 | - | 145 |
| Mélange catégorie 3 | X_{HFE} = 0,65 | 23 | - | - | 202 |
| Mélange catégorie 4 | X_{HFE} = 0,95 | 60 | - | - | 141 |
| Carbonate de méthyle et d'éthyle | | 23 | 107 | -53 | 352 |
| 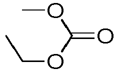 | | | | | |
| azéotrope | X_{HFE} = 0,66 | 37 | 110 | - | 206 |
| Mélange catégorie 3 | X_{HFE} = 0 | 23 | 107 | -53 | 352 |
| Mélange catégorie 4 | X_{HFE} = 0,89 | 60 | - | - | 156 |
| Pentan-3-one | | 13 | 102 | -39 | 388 |
| 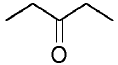 | | | | | |
| azéotrope | X_{HFE} = 0,84 | 35 | 108 | - | 172 |
| Mélange catégorie 3 | X_{HFE} = 0,65 | 23 | - | - | 221 |
| Mélange catégorie 4 | X_{HFE} = 0,95 | 60 | - | - | 144 |

Un mélange peut comporter un fluoro-alcool et un composé carbonylé.

De manière avantageuse, le fluoro-alcool est choisi parmi le pentafluoropropanol, l'heptafluorobutanol et l'heptafluoropentan-2-ol, et le composé carbonylé est choisi parmi le formiate de butyle, l'acétate de tert-butyle, le carbonate de méthyle et d'éthyle, le carbonate de diméthyle et la pentan-3-one.

Les compositions et caractéristiques de certains de ces mélanges figurent dans le tableau 4. Lorsque le mélange présente un point azéotropique, celui-ci est précisé.

**Tableau 4 : Caractéristiques de mélanges fluoroalcool - composé carbonylé de l'invention**

| Pentafluoropropanol | | PE (en °C) | Téb (en °C) | T_{f} (en °C) | ΔHᵥₐₚ (kJ/kg) |
|---|---|---|---|---|---|
| 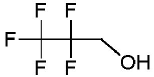 | | aucun | 80 | -3 | 206 |
| Carbonate de diméthyle | | 17 | 90 | 4 | 366 |
| 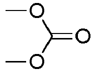 | | | | | |
| Mélange catégorie 3 | X_{HFE} = 0,36 | 23 | - | - | 308 |
| Mélange catégorie 4 | X_{HFE} = 0,89 | 60 | - | - | 223 |

| Heptafluorobutanol | | PE (en °C) | Téb (en °C) | T_{f} (en °C) | ΔHᵥₐₚ (kJ/kg) |
|---|---|---|---|---|---|
| 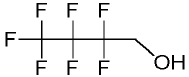 | | 91 | 96 | N.A | 195 |
| Formiate de butyle | | 18 | 106 | -90 | 358 |
| 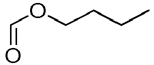 | | | | | |
| Mélange catégorie 3 | X_{HFE} = 0,41 | 23 | 103 | - | 291 |
| Mélange catégorie 4 | X_{HFE} = 0,95 | 60 | 97 | - | 203 |
| Pentan-3-one | | 13 | 102 | -39 | 388 |
| 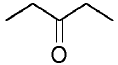 | | | | | |
| Mélange catégorie 3 | X_{HFE} = 0,64 | 23 | - | - | 265 |
| Mélange catégorie 4 | X_{HFE} = 0,96 | 60 | - | - | 203 |

| Heptafluoropentan-2-ol | | PE (en °C) | Téb (en °C) | T_{f} (en °C) | ΔHᵥₐₚ (kJ/kg) |
|---|---|---|---|---|---|
| 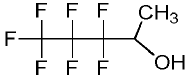 | | aucun | 100 | N.A | 188 |
| Formiate de butyle | | 18 | 106 | -90 | 358 |
| 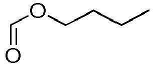 | | | | | |
| Mélange catégorie 3 | X_{HFE} = 0,41 | 23 | 103 | - | 288 |
| Mélange catégorie 4 | X_{HFE} = 0,92 | 60 | - | - | 202 |
| Carbonate de méthyle et d'éthyle | | 23 | 107 | -53 | 352 |
| 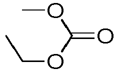 | | | | | |
| azéotrope | X_{HFE} = 0,36 | 30 | 109 | - | 293 |
| Mélange catégorie 3 | X_{HFE} = 0 | 23 | 107 | -53 | 352 |
| Mélange catégorie 4 | X_{HFE} = 0,8 | 60 | - | - | 221 |
| Carbonate de diméthyle | | 17 | 90 | 4 | 366 |
| 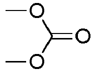 | | | | | |
| azéotrope | X_{HFE} = 0,85 | 36 | 101 | - | 215 |
| Mélange catégorie 3 | X_{HFE} = 0,42 | 23 | - | - | 291 |
| Mélange catégorie 4 | X_{HFE} = 0,9 | 60 | - | - | 206 |

Une autre catégorie de mélanges réfrigérants comprend un fluoro-alcool et un alcool.

Les liaisons hydrogène au sein de tels mélanges sont très faibles, puisque les deux constituants sont donneurs d'hydrogène. Cela favorise l'émergence d'une déviation azéotropique positive.

Préférentiellement, le fluoro-alcool est choisi parmi le pentafluoropropan-1-ol, l'heptafluorobutanol et l'heptafluoropentan-2-ol, et l'alcool est choisi parmi l'éthanol, le propanol et le propan-2-ol.

Le tableau 5 résume les compositions et caractéristiques de certains de ces mélanges. Lorsque le mélange présente un point azéotropique, celui-ci est précisé.

**Tableau 5 : Caractéristiques de mélanges fluoroalcool - alcool de l'invention**

| Pentafluoropropanol | | PE (en °C) | Téb (en °C) | T_{f} (en °C) | ΔHᵥₐₚ (kJ/kg) |
|---|---|---|---|---|---|
| 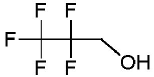 | | aucun | 80 | -3 | 313 |
| éthanol | | 13 | 78 | -114 | 837 |
| azéotrope | X_{HFE} = 0,71 | 19 | 77 | - | 465 |
| Mélange catégorie 3 | X_{HFE} = 0,77 | 23 | 78 | - | 433 |
| Mélange catégorie 4 | X_{HFE} = 0,98 | 60 | - | - | 324 |
| Propan-2-ol | | 11 | 82 | -88 | 606 |
| Azéotrope Mélange catégorie 3 | X_{HFE} = 0,8 | 23 | 78 | - | 372 |
| Mélange catégorie 4 | X_{HFE} = 0,98 | 60 | - | - | 319 |

| Heptafluorobutanol | | PE (en °C) | Téb (en °C) | T_{f} (en °C) | ΔHᵥₐₚ (kJ/kg) |
|---|---|---|---|---|---|
| 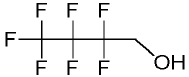 | | 91 | 96 | N.A | 195 |
| propanol | | 25 | 97 | -124 | 690 |
| azéotrope | X_{HFE} = 0,72 | 29 | 92 | - | 334 |
| Mélange catégorie 4 | X_{HFE} = 0,98 | 60 | - | - | 205 |
| Heptafluoropentan-2-ol | | PE (en °C) | Téb (en °C) | T_{f} (en °C) | ΔHᵥₐₚ (kJ/kg) |
| 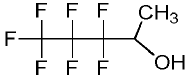 | | aucun | 100 | N.A | 188 |
| propanol | | 25 | 97 | -124 | 690 |
| azéotrope | X_{HFE} = 0,58 | 29 | 96 | - | 399 |
| Mélange catégorie 4 | X_{HFE} = 0,97 | 60 | - | - | 203 |

La présente invention porte en outre sur l'utilisation d'un mélange selon elle comme fluide caloporteur, avantageusement dans un échangeur de chaleur tel qu'un échangeur diphasique.

Il peut s'agir d'un échangeur diphasique à pompage capillaire, comme les caloduc, CPL, LHP et thermosyphon, bien connus de l'homme du métier, ou d'une boucle diphasique à pompage mécanique.

Plus généralement, l'invention concerne également un dispositif d'échange de chaleur comprenant comme fluide caloporteur un mélange selon l'invention.

Ledit dispositif d'échange de chaleur peut notamment consister en un échangeur diphasique à pompage capillaire ou une boucle diphasique à pompage mécanique.

## Revendications

1. Mélange réfrigérant comprenant un composé fluoré et un composé non fluoré, dans lequel le composé fluoré est un hydrofluoroéther choisi parmi le 1-méthoxyperfluoropentane, le 1-méthoxyperfluorohexane, le 1,1,1,2,2,3,4,5,5,5-décafluoro-3-méthoxy-2-trifluorométhylpentane, le 1,1,2,2-tétrafluoroéthyl-2,2,3,3-tétrafluoropropyléther et le 1H,1H,2H',3H-décafluoro-dipropyléther, et le composé non fluoré comporte une fonction carbonyle et est choisi parmi le formiate de butyle, l'acétate de tert-butyle, l'acétate de propyle, le carbonate de méthyle et d'éthyle, le carbonate de diméthyle et la pentan-3-one, ledit mélange présentant un point d'éclair supérieur ou égal à 23°C et étant **caractérisé par** une faible volatilité relative.

2. Utilisation d'un mélange selon la revendication 1 comme fluide caloporteur.

3. Utilisation selon la revendication 2 dans un échangeur de chaleur.

4. Utilisation selon la revendication 3, **caractérisée en ce que** ledit échangeur de chaleur est un échangeur diphasique à pompage capillaire ou une boucle diphasique à pompage mécanique.

5. Dispositif d'échange de chaleur comprenant un fluide caloporteur, **caractérisé en ce que** ledit fluide caloporteur est un mélange selon la revendication 1.

6. Dispositif d'échange de chaleur selon la revendication 5, **caractérisé en ce que** ledit dispositif d'échange de chaleur est un échangeur diphasique à pompage capillaire ou une boucle diphasique à pompage mécanique.

## Patentansprüche

1. Kältemittelmischung, die eine fluorierte Verbindung und eine nicht fluorierte Verbindung umfasst, wobei die fluorierte Verbindung ein Hydrofluorether ist, ausgewählt aus 1-Methoxyperfluorpentan, 1-Methoxyperfluorhexan, 1,1,1,2,2,3,4,5,5,5-Decafluor-3-methoxy-2-trifluormethylpentan, 1,1,2,2-Tetrafluorethyl-2,2,3,3-tetrafluorpropylether und 1H,1H,2H',3H-Decafluor-dipropylether, und die nicht fluorierte Verbindung eine Carbonylfunktion enthält und ausgewählt ist aus Butylformiat, tert-Butylacetat, Propylacetat, Methylethylcarbonat, Dimethylcarbonat und Pentan-3-on, wobei die Mischung einen Flammpunkt höher als oder gleich 23°C aufweist und durch eine schwache relative Flüchtigkeit gekennzeichnet ist.

2. Verwendung einer Mischung nach Anspruch 1 als Wärmeübertragungsfluid.

3. Verwendung nach Anspruch 2 in einem Wärmetauscher.

4. Verwendung nach Anspruch 3, **dadurch gekennzeichnet, dass** der Wärmetauscher ein kapillar gepumpter Zweiphasen-Wärmetauscher oder ein mechanisch gepumpter Zweiphasen-Kreislauf ist.

5. Wärmetauschvorrichtung, die ein Wärmeübertragungsfluid umfasst, **dadurch gekennzeichnet, dass** das Wärmeübertragungsfluid eine Mischung nach Anspruch 1 ist.

6. Wärmetauschvorrichtung nach Anspruch 5, **dadurch gekennzeichnet, dass** die Wärmetauschvorrichtung ein kapillar gepumpter Zweiphasen-Wärmetauscher oder ein mechanisch gepumpter Zweiphasen-Kreislauf ist.

## Claims

1. A refrigerant mixture comprising a fluorinated compound and a non-fluorinated compound, wherein the fluorinated compound is a hydrofluoroether selected from 1-methoxyperfluoropentane, 1-methoxyperfluorohexane, 1,1,1,2,2,3,4,5,5,5-decafluoro-3-methoxy-2-trifluoromethylpentane, 1,1,2,2-tetrafluoroethyl-2,2,3,3-tetrafluoropropylether and 1H,1H,2H',3H-decafluoro-dipropylether, and the non-fluorinated compound has a carbonyl function and is selected from butyl formate, tert-butyl acetate, propyl acetate, methyl ethyl carbonate, dimethyl carbonate and pentan-3-one, said mixture having a flash point of 23°C or above and being **characterized by** low relative volatility.

2. Use of a mixture according to claim 1 as a heat-transfer fluid.

3. Use according to claim 2 in a heat exchanger.

4. Use according to claim 3, **characterized in that** said heat exchanger is a capillary-pumped two-phase exchanger or a mechanically-pumped two-phase loop.

5. A heat exchange device comprising a heat-transfer fluid, **characterized in that** said heat-transfer fluid is a mixture according to claim 1.

6. The heat exchange device according to claim 5, **characterized in that** said heat exchange device is a capillary-pumped two-phase exchanger or a mechanically-pumped two-phase loop.
